# EUROPEAN PATENT SPECIFICATION

(11) **EP 0 921 140 B1**
(45) Date of publication and mention of the grant of the patent: **22.09.2004**
(21) Application number: 98123301.8
(22) Date of filing: 08.12.1998
(51) Int. Cl.: C08G 18/58, C08G 18/64, C09D 5/00

(54) **Epoxy-urethane imine primer**
Epoxy-Urethan-Imin -Grundierung
Couche de fond en epoxy-uréthane imine

(30) Priority: 08.12.1997 US 986964; 08.12.1997 US 987093; 08.12.1997 US 987094
(43) Date of publication of application: 09.06.1999
(73) Proprietor: BASF CORPORATION, Mount Olive, New Jersey 07828-1234 (US)
(72) Inventor: Thieben, Larry E., Waterville, Ohio 43556 (US); Mormile, Patrick J., Bowling Green, Ohio 43202 (US); Richards, Bradley M., Maumee, Ohio 43537 (US); Shah, Rajnikant, Thaltej, Ahmedabad 380054 (IN)
(74) Representative: Fitzner, Uwe, Dr.

(56) References cited:
- US-A- 3 993 708
- US-A- 4 557 814
- US-A- 5 034 495
- US-A- 5 071 951
- US-A- 5 227 414

## Description

### FIELD OF THE INVENTION

The present invention is directed to novel coating compositions. In particular, the present invention is directed to polyuroxy coating compositions that comprise an epoxy, imine (preferably ketimine) , isocyanate and optionally an active hydrogen compound or an active hydrogen containing compound, where for the purpose of this invention the term polyuroxy describes the reaction product of polyurethanes, polyurea and epoxy amine. The compositions have been found to be excellent refinish or sealer compositions, are tintable, and may be applied, wet on wet, utilizing a basecoat/clearcoat or single stage topcoat over them.

### BACKGROUND OF THE INVENTION

With increasing Volatile Organic Content (VOC) restrictions, it is difficult to get a balance of pot life and dry time for coatings useful in refinish paint compositions. The main problems have been that the hydroxyl functional polyols are generally high molecular weight resins, which are viscous materials and require a lot of organic solvents in order to reduce to sprayable viscosities. It is also difficult to get the VOC low enough to be compliant with environmental restrictions. By using reactive diluents in combination with the polyol and isocyanates, lower VOC can be achieved. An excellent example of this type of coating is exemplified in U.S. Patent No. 5,214,086 and is assigned to BASF Corporation.

In the prior art, the use of diketimines, dialdimines, and hindered diamines as reactive diluents, helps to lower the viscosity and increase the solids, thus enabling coating compositions to reach required VOC limits. However, as more stringent VOC limits are being set, it has become necessary to try and achieve even lower VOC levels. Low molecular weight hydroxyl functional polyols are difficult to use in order to reach these VOC limits. In addition, these polyols react very fast and therefore it is difficult to achieve a sufficient pot life.

An approach to a coating composition has been to mix epoxy reactants and/or epoxy/amine reactants with urethane and/or isocyanate reactants but because amines react exceedingly faster with epoxy compounds than with the urethane or isocyanate compounds they leave epoxy or hydroxyl groups which do not react under ambient conditions with isocyanate

Coating compositions comprising epoxy resins and various adducts of isocyanates with other compounds as hardeners are known e.g. from US 3,993,708; US 5,034,495; US 5,071,951 and US 5,227,414.

We have now found that polyuroxy coating compositions overcome the prior art disadvantages and result in low VOC coatings that are especially useful in refinish compositions.

The present invention is directed to novel coating compositions containing polyuroxy compounds. In particular, the present invention is directed to coating compositions that comprise the reaction product of epoxy, imine, isocyanate and/or active hydrogen compound(s) and/or active hydrogen containing compound(s).

### SUMMARY OF THE INVENTION

The present invention relates to the use of polyureas and/or polyuroxy compositions in coating systems especially coatings suitable for the production of paint for the automotive industry. The coatings can be cured at ambient conditions or can be cured by baking and are therefore useful in refinish paint compositions. The coating composition optionally contains pigments and other well known paint additives such as fillers, rheology control agents, dispersing agents, solvents.

The coating composition contains:
a) at least one epoxy functional compound,
b) an imine functional compound,
c) at least one isocyanate functional compound
d) and optionally an active hydrogen compound and/or an active hydrogen containing compound.

The coating composition can be low in volatile organic content (VOC), but the invention is not limited to only low VOC compositions. The invention also relates to the coating composition's reaction behavior which is moisture dependent, though moisture is not essential for the reaction. The invention also relates to optionally using catalysts to accelerate the reaction rate of the active hydrogen compound of the imine functional compound, secondary amine and aldimine compounds with the isocyanate compounds. The catalysts used in this invention are aromatic or aliphatic carboxylic acids, inorganic acids such as sulfonic acids, organic tin based compounds or arylsulfonic acids as described in the cited prior art. The use of moisture scavengers in order to control the reaction rates in humid conditions is optional.

### DETAILED DESCRIPTION OF THE INVENTION

The present invention relates to the use of polyureas and/or polyuroxy compositions in coating systems especially coatings suitable for the production of paint for the automotive industry. The coatings can be cured at ambient conditions or by baking and are therefore useful in refinish paint compositions. The coating composition optionally contains pigments and other well known paint additives such as fillers, rheology control agents, dispersing agents, solvents.

The coating composition contains:
a) at least one epoxy functional compound,
b) an imine functional compound,
c) at least one isocyanate functional compound
d) and optionally an active hydrogen compound and/or an active hydrogen containing compound.

In the coating compositions according to the invention the polyuroxy parts are created in situ during the curing process:
1.) The polyurethane is obtained by reaction of isocyanate groups with "activated" epoxy functional compounds (meaning per addition to the epoxy group formed hydroxyl groups or the like) and/or active hydrogen (containing) compounds.
2.) The polyurea is obtained by reaction of the imine, either as an enamine or after hydrolisation as an amine, with isocyanate groups.
3.) The epoxy amine is obtained from the epoxy compound and the imine (as enamine or amine).

This invention also describes a method for reducing the volatile organic content (VOC) of a paint composition, by increasing the solids in a paint composition without adversely affecting the application, durability or performance of the composition.

Useful epoxy compounds are those which react with amine or imine functional compounds under ambient or bake conditions. Optionally these epoxides may be reactive with other active hydrogen containing compounds.

Useful isocyanates are di- or polyisocyanates which are aliphatic, cycloaliphatic, or aromatic. Such isocyanates include hexamethylene diisocyanate, 1-methyl-2, 4-diisocyanatocyclohexane, isophorone diisocyanate,4,4-diisocyanatodicyclohexyl methane, toluene-2-4-diisocyanate, o-, m-, and p-xylene diisocyanate, 1-5-naphthalene diisocyanate or mixtures thereof. It is also possible to use polyisocyanates with isocyanurates, allophanate or uretdione structures. The polyisocyanates may optionally be reacted with a deficit of polyhydroxy compounds, such as water, glycols, polyalkylene glycols, neopentyl glycols, glycerol, trimethylol propane, hexane triol, or alkyd resins, before being used.

This invention also relates to a process of formulating coatings by using aldimine and ketimine. Typically, the aldimine does not completely hydrolyze into amine and aldehyde, but probably reacts with the isocyanate as the enamine.

Useful hydroxyl containing compounds are acrylic polyols, polyester polyols and those known to the prior art.

The composition may also contain pigments. These pigments can be introduced by first forming a mill base with the secondary amine functional compound and/or epoxy functional compound or optionally with the aldimine by conventional techniques, such as sand grinding, ball milling, attritor grinding, or two roll milling to disperse the pigments. The mill base is blended with the film forming constituents as shown in the examples which follow.

The invention also relates to optionally using catalysts to accelerate the reaction rate of the epoxy and imine compounds with isocyanate compounds. The catalysts to be used in this invention may be organic acids, such as aromatic or aliphatic carboxylic acids as well as arylsulfonic acids, inorganic acids such as sulfonic acids, or organic tin based compounds.

The use of moisture scavenging materials is optional in this application and may be used in order to control the water which is released from the pigments, especially in grinding and to control the reaction rates in humid conditions. The removal of this water in the mill base helps to control the reaction rates of the coating composition and allow for the desired properties of the coating film.

Coating compositions described by the present invention find utility in application of ambient film forming and curing such as automotive refinish coatings. It is also suggested that the present invention applied to coatings to be force dried or baked to accelerate the coating curing process. Forced dry conditions range from 38°C (100 degrees Fahrenheit) to over 163°C (325 degrees Fahrenheit). The coating cure process for the present invention may also be accelerated by the utilization of radiant heating or Infra Red emitting devices known to the art.

The following examples are intended to illustrate the invention.

The following epoxy-isocyanate-imine (polyuroxy) primer systems were prepared and achieved a 1.41 kg/s (3.1 lbs.) VOC or less and exhibited excellent adhesion, humidity resistance, salt spray resistance and chip resistance. Typical vehicle compositions are listed in the following examples (1-3):
The specific use as a tintable sealer is illustrated in the examples (4, 5), which use actual BASF automotive refinish products to prepare the tinted polyuroxy sealer. Two examples of a tinted sealer are provided. These examples are the prime embodiment of polyuroxy as a tintable sealer. They are especially useful as a sealer under a poor hiding basecoat/clearcoat topcoat, or poor hiding single-stage topcoat. The examples illustrated here utilize a BASF single-stage topcoat, HS SOLO.

### EXAMPLES

### Example 1

| | [%] by weight | [%] by weight |
|---|---|---|
| Epoxy resin (Dow DER 663U) | 21.8 | 34.3 |
| Butyl benzyl phthalate (Monsato Santicizer 160) | 5.7 | 9.3 |
| Ketimine resin (Akzo Setalux K (7002 bX-55) | 9.7 | 14.4 |
| Hydroxyl acrylic (BASF Acrylic Resin) | 22.9 | --- |
| Isocyanurate trimer (Rhone-Poulenc Tolonate HDT) | 39.9 | 42.0 |
| Total | 100 | 100 |

### Example 2

| | [%] by weight |
|---|---|
| Epoxy resin (SHELL Epon 1001-X-75) | 16.8 |
| Epoxy ester resin (BASF Epoxy Ester) | 14.5 |
| Ketimine (BAYER LS-2965) | 33.1 |
| Isocyanate trimer (Rhone-Poulenc Tolonate HDT-LV) | 9.6 |
| Isocyanate trimer (BAYER N-3400) | 26.0 |
| Total | 100 |

### Example 3

| | [%] by weight |
|---|---|
| Epoxy resin (Dow DER 663U) | 34.3 |
| Butyl benzyl phthalate (Monsato Santicizer 160) | 9.3 |
| Aldimine (BAYER XP-7076) | 14.4 |
| Isocyanate trimer (Rhone-Poulenc Tolonate HDT) | 42.0 |
| Total | 100 |

### Examples 4, 5

### Tintable polyuroxy sealers

| | Example 4 [%] by volume | Example 5 [%] by volume |
|---|---|---|
| BASF white epoxy primer EP-689 | 33 | 33 |
| BASF single-stage red tint base HS SOLO HS-82 | 17 | -- |
| BASF single-stage yellow tint base HS SOLO HS-62 | -- | 17 |
| BASF ketimine polyuroxy activator - UA-97 | 33 | 33 |
| BASF isocyanate hardener - DH-46 | 17 | 17 |
| Total | 100 | 100 |

The red polyuroxy sealer of example 4 is indicative of the formula cited as example 6. This sealer was topcoated with BASF HS SOLO topcoat red. Adequate topcoat color development was achieved with two coats of the single stage topcoat, as measured by computer measurement of Delta E from the standard. Normally, if the H86404 red single-stage topcoat were applied over an untinted epoxy sealer, it would require 3-4 coats to achieve an adequate color match to the standard. Therefore, the use of the polyuroxy technology as a tintable sealer saves time and money. It should be mentioned, that only one coat of polyuroxy sealer was applied.

The yellow polyuroxy sealer of example 5 is indicative of the formula cited as example 1. This sealer was topcoated after 15-20 minutes flash off time, with BASF HS SOLO single-stage topcoat yellow. One coat of polyuroxy tintable sealer was applied, followed by 2 coats of H80755 single-stage yellow. At this point, adequate color development was achieved, as measured by computer measurement of Delta E from the standard. For comparison purposes, the same H80755 single-stage yellow topcoat was applied over a standard untinted epoxy primer, which was gray. In this case, it took 4 coats of the H80755 yellow to achieve adequate color match, to the standard.

In summary, the polyuroxy technology allows the combination of epoxy technology with hydrofunctional resin systems, such as described in U.S. 5,214,086. This allows the epoxy component to be tinted any color, preferably to match closely to that of the topcoat, so that time and money may be saved, because fewer consecutive coating processes are necessary. The role of the ketimine activator and isocyanate hardener, are especially important to the polyuroxy technology, in that they allow the entire system to become an integrally crosslinked network.

## Claims

1. A polyuroxy coating composition containing:
a) at least one epoxy functional compound,
b) an imine functional compound,
c) at least one isocyanate functional compound
d) and optionally an active hydrogen compound and/or an active hydrogen containing compound.

2. A composition according to claim 1 which is cured at ambient temperatures.

3. A composition according to claim 1 which is baked to cure.

4. A composition according to claim 1 that additionally contains at least one pigment.

5. A composition according to claim 1 wherein the isocyanate functional compound is chosen from aliphatic, aromatic or cycloaliphatic mono, or diisocyanates, triisocyanates, uretdiones, biuret or isocyanate functional polymers.

6. A composition according to claim 5 wherein the isocyanate functional compound is a dimer or trimer of hexamethylene diisocyanate or a blend of both.

## Patentansprüche

1. Polyuroxy-Beschichtungszusammensetzung, die folgendes umfasst:
a) mindestens eine Verbindung mit Epoxyfunktion(en),
b) mindestens eine Verbindung mit Iminfunktion(en),
c) mindestens eine Verbindung mit Isocyanatfunktion(en)
d) und gegebenenfalls eine aktive Wasserstoffverbindung und/oder eine Verbindung, die aktiven Wasserstoff umfasst.

2. Zusammensetzung nach Anspruch 1, die bei Umgebungstemperaturen gehärtet wird.

3. Zusammensetzung nach Anspruch 1, die zum Härten gebacken wird.

4. Zusammensetzung nach Anspruch 1, die zusätzlich mindestens ein Pigment umfasst.

5. Zusammensetzung nach Anspruch 1, wobei die Verbindung mit Isocyanatfunktion(en) aus aliphatischen, aromatischen oder cycloaliphatischen Mono- oder Diisocyanaten, Triisocyanaten, Uretdionen, Biuret oder Polymeren mit Isocyanatfunktion(en) ausgewählt ist.

6. Zusammensetzung nach Anspruch 5, wobei die Verbindung mit Isocyanatfunktion(en) ein Dimer oder Trimer von Hexamethylendiisocyanat oder eine Mischung von beiden ist.

## Revendications

1. Composition de revêtement polyuroxy contenant :
a) au moins un composé fonctionnel époxy,
b) un composé fonctionnel de type imine,
c) au moins un composé fonctionnel de type isocyanate
d) et éventuellement un composé hydrogéné actif et/ou un composé contenant un atome d'hydrogène actif.

2. Composition selon la revendication 1, qui est solidifiée aux températures ambiantes.

3. Composition selon la revendication 1, qui est séchée au four pour le durcissement.

4. Composition selon la revendication 1, qui contient au moins un pigment.

5. Composition selon la revendication 1, dans laquelle le composé fonctionnel de type isocyanate est choisi parmi des mono- et diisocyanates aliphatiques, aromatiques ou cycloaliphatiques, des triisocyanates, des uretdiones, des polymères à fonction biuret ou isocyanate.

6. Composition selon la revendication 5, dans laquelle le composé fonctionnel de type isocyanate est un dimère ou trimère d'hexaméthylène-diisocyanate ou un mélange des deux.
